# EUROPEAN PATENT SPECIFICATION

(11) **EP 0 880 099 B1**
(45) Date of publication and mention of the grant of the patent: **13.08.2003**
(21) Application number: 97830234.7
(22) Date of filing: 22.05.1997
(51) Int. Cl.: G06F 12/12

(54) **Cache-type memory structure**
Speicherstruktur nach Art eines Pufferspeichers
Structure de mémoire du type antémémoire

(43) Date of publication of application: 25.11.1998
(73) Proprietor: BULL S.A., 78434 Louveciennes Cedex (FR)
(72) Inventor: Vescera, Cinzia, 20011 Corbetta (IT)
(74) Representative: Pezzoli, Ennio

(56) References cited:
- EP-A- 0 509 231
- US-A- 5 513 336
- KAREDLA R ET AL: "CACHING STRATEGIES TO IMPROVE DISK SYSTEM PERFORMANCE" COMPUTER, vol. 27, no. 3, 1 March 1994, pages 38-46, XP000443069

## Description

The present invention relates to a cache-type memory structure, and in particular to a cache-type memory structure according to the preamble of the first claim.

It is known that in a processing system the operations of access to a memory (either for reading or writing) are rather slow and require numerous accesses to a communication bus to which the various components of the system are linked. Very fast cache-type memories with, however, limited capacity are commonly used for the purpose of improving the performance of the memory access operations without having an excessive impact on the overall cost of the processing system. All the data are stored in a relatively slow high-capacity main memory, whilst the cache memory comprises addressable locations (entries) each of which stores more frequently used corresponding data blocks from the main memory, together with the relevant service information, such as an address for the block in the main memory; in this way it is possible statistically to reduce the number of accesses to the slower memory while reading the data blocks, or even some of them, from the cache memory. Typically, the cache memory sits inside a device which uses the main memory, so as to reduce the number of accesses to the communication bus.

When read-access to a data item in the memory is requested, if this item is present in the cache memory it is read directly from the fast memory; otherwise, a data block comprising the data item requested is read from the main memory and simultaneously copied into a location in the cache memory, as it is statistically very probable that the other data from the block will also be requested subsequently. If no space is available in the cache memory, a location is freed (disabled) and its content is then replaced with the block read from the main memory.

With the operation for reading a block, one or more subsequent blocks having addresses contiguous with the address of the block read are generally read ahead (prefetch) from the main memory. The reading ahead of subsequent blocks makes it possible substantially to increase the memory access speed, as it is statistically very probable that the data from the blocks read ahead will be requested subsequently.

The known art for the management and replacement of blocks of a cache memory generally use algorithms of the "Least Recently Used" (LRU) type; the new blocks copied into the cache memory are written to locations which have not been used for a greatest period of time. US-A-5513336 (VISHLITZKI N. et al.) discloses a cache management system which monitors and controls a cache memory in which are stored data elements awaiting writing to a longer term data storage device. Once the data elements have been actually written to the data storage device, the disclosed system uses an indication of the amount of time the data element was in cache as well an indication of the number of times a data element was accessed in order to determine how long to maintain the data record in the cache. A drawback of the known cache-memory structures consists in the fact that the management techniques used do not guarantee to disable under any operating conditions the location having a smallest probability of being reused; such techniques therefore do not allow optimal use of the cache memory.

The purpose of the present invention is to overcome the aforesaid drawbacks. In order to achieve this purpose there is proposed a cache-type memory structure as described in the first claim.

The structure of the present invention manages the cache memory more efficiently, making it possible to replace the blocks which have a small probability of being reused within a short period.

Such a structure lends itself particularly to being used to increase the performance of the read operations in a direct memory access system, although its use in different applications is not excluded.

Further characteristics and advantages of the cache-type memory structure according to the present invention will emerge from the description set forth below of a preferred embodiment thereof, given by way of non-limiting illustration, with reference to the appended figures in which:
Fig. 1 is a basic block diagram of a processing system in which the cache-type memory structure of the present invention can be used;
Fig. 2 shows a simplified state chart of the flags associated with the cache memory;
Fig. 3 illustrates an embodiment of the cache memory;
Figs. 4a and 4b show flow charts of a method of management and replacement of the cache-type memory structure.

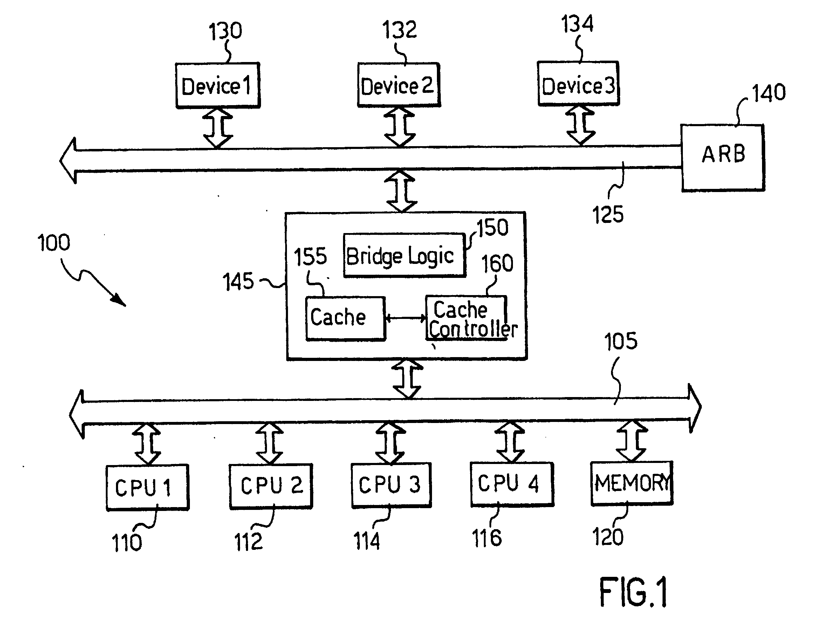

Illustrated with reference in particular to Fig. 1 is a multi-processor processing system 100 comprising a system bus 105 to which various central processing units (CPUs) 110-116 (four in the example illustrated) are linked; a main memory 120 of high capacity (for example a few Gbytes) is furthermore connected to the system bus 105. The processing system 100 includes a local bus 125 to which various peripheral units 130-134 (three in the example illustrated) are linked, such as input units, output units, mass memories, and the like; the units 130-134 operate in so-called "master" mode with the function of controlling access (in mutual exclusion) to the local bus 125.

The CPUs 110-116 and the peripheral units 130-134 communicate to each other via a direct memory access (or DMA) procedure. Each input or output operation includes the loading into the units 130-134 of an address corresponding to the memory address to or from which the data will be written or read and the quantity thereof; all the operations of access to the memory 120 are therefore managed directly by the units 130-134 which, on concluding, signals the completion of the operation to the CPUs 110-116 through an interrupt signal. This technique makes it possible to serve very fast units 130-134 which request vast amounts of data, meanwhile freeing the CPUs 110-116. The various requests for access to the local bus 125 from the units 130-134 are managed through an appropriate arbitration unit 140.

The system bus 105 and the local bus 125 are linked together by means of an interface unit or "bridge" 145. In particular, the bridge 145 includes a logic unit 150 which manages access to the buses 105 and 125, converts the memory addresses for the two buses and undertakes other conventional operations known per se. Housed in the bridge 145 is a very fast cache-type memory 155 with, however, lowish capacity (for example a few hundred bytes) which stores data corresponding to those stored in the main memory 120. In particular, the data stored in the main memory 120 are represented by binary codes and are grouped into words, single, double or quadruple (depending on the degree of parallelism of the memory), which are stored in a memory location and handled simultaneously. The data in the cache memory 155 are structured into blocks, each of which comprises one or more words, stored in a location of the cache memory together with an associated address corresponding to the address of the block in the main memory 120. A control logic device (cache controller) 160 manages the operation of the cache memory 155 through appropriate control signals.

The structure of the cache memory 155, 160 of the present invention however lends itself to being used in different systems also, for example single-processor systems, with a single bus to which the various components of the system are linked and in which other techniques for managing the peripheral units may be used, such as for example program control, interrupt; furthermore, such a cache memory structure is suitable for use in a CPU, in an input/output device, in a hierarchical memory and the like.

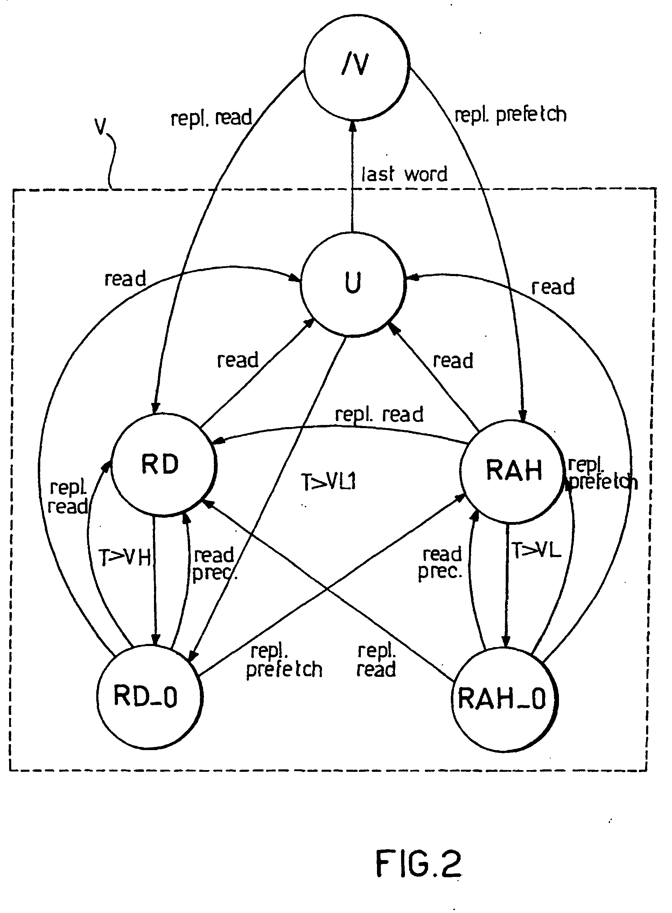

In the memory structure according to the present invention, with each block of data in the cache memory 155 is associated a flag indicative of its state. With reference in particular to the simplified state chart of Fig. 2, this flag takes a value "not enabled" or /V when the block has not yet been used, i.e. does not contain data copied from the main memory, or else the block has been completely used (i.e. read) by the unit (or agent) which had requested the reading of the corresponding data; it should be noted that in a phase of initialization of the cache memory, the flags of all the blocks are set to the value /V.

Otherwise, the block is in an enabled state (V) and the data contained therein are available to be supplied to any unit which requests them. In particular, the flag associated with the block takes a value "Read Ahead" or RAH when the block contains data requested for a read ahead operation but never used; the block has therefore not actually been requested by any unit, but has been read ahead by the control logic of the cache memory following the requesting of a previous block. If such a block has never been used for a period of time greater than a threshold value VL, expressed for example as a number of periods of a clock signal, the associated flag is modified to a value "read ahead old" or RAH_O. Preferably, the flag is modified from the value RAH to the value RAH_O only if simultaneously the immediately previous block (or else any one of a specified number of previous blocks) has not been used for the same period of time VL; the flag furthermore returns to the value RAH with each reading of the previous block.

On the other hand, the flag associated with the block, containing data requested either for an actual read operation or for a read ahead operation, takes a value "Used" or U when part of the block (but not the last word) has been read by the requesting unit. If the period of time from a last use of this block exceeds a further threshold value VL1, advantageously equal to the previous value VL, the associated flag is modified to a value "read old" or RD_O. Preferably, the flag is modified from the value U to the value RD_O only if simultaneously any immediately previous block (or else one of the previous blocks) has not been used for the same period of time VL1; the previous block can be present in the cache memory for example because the block in question has been allocated in consequence of a read ahead or else because the previous block has been requested by a different unit.

Preferably, the flag associated with the block also takes a value "Read" or RD when the block contains data requested for an actual read operation but never used. This situation may occur for example if, when the datum requested is not present in the cache memory, an appropriate message (RETRY) is sent to the requesting unit to advise it to repeat the read request; in this way, while the block is loaded into the cache memory, the local bus does not remain occupied. The present invention thus lends itself to being embodied also without such a value of the flag, for example in the case in which a block is used immediately by the requesting unit when the former is loaded into the cache memory with an actual read operation. If the block in the state RD has never been used for a period of time greater than a threshold value VH, advantageously greater than the threshold value VL (and VL1), the associated flag is modified to the value RD_O. Preferably, in this case also the flag is modified from the value RD to the value RD_O only if simultaneously any previous block (or else one of the previous blocks), requested for example by a different unit, has not been used for the same period of time VH; the flag returns moreover to the value RD with each reading of the previous block.

When a block is replaced, as described in detail below, the flag associated with the block is modified from the value /V, RAH_O, RD_O or RAH to the value RD with an actual read operation, and from the value /V, RAH_O or RD_O to the value RAH with a read ahead operation.

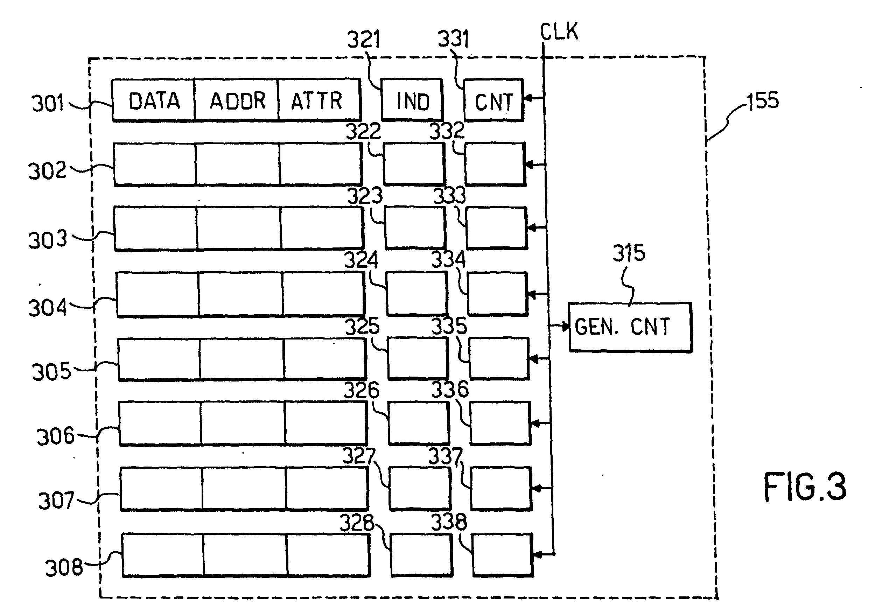

In a particular embodiment of the present invention, as represented in Fig. 3 (the elements already represented in Fig. 1 are identified with the same reference numbers), the cache memory 155 includes a plurality of locations 301-308, each of which contains a data block (DATA) together with the associated address (ADR) and the corresponding flag (ATTR); for example, the cache memory 155 includes eight locations and each data block stores eight quadruple words of 64 bits. Preferably, the cache memory 155 is of full associative type, in which the location which contains a specific item of information can be identified directly. In this case, the associated address is used as search key; this makes it possible to determine extremely fast whether a block is present in the cache memory 155. Alternatively, a different structure of the cache memory is used, for example one organized at several levels of associativity.

The cache memory 155 includes a general counter 315, for example with 15-bit, incremented automatically with each clock signal CLK of the processing system. With each location 301-308 is associated an indicator 321-328 which is zeroed when the flag corresponding to the block takes the value RD or else with a read of any previous block. Each time the general counter 315 is zeroed on completing a count cycle, after 2¹⁵ clock signals in the example in question, the indicator 321-328 associated with each block having the corresponding flag of value RD is incremented by 1. When this indicator 321-328 reaches a preset value, for example 2, the flag associated with the block is modified to the value RD_O. In this way the flag associated with a block will pass from the value RD to the value RD_O after a variable number of clock signals lying between a minimum value of 2¹⁵ (if the flag is set to the value RD when the general counter 315 *is* zeroed) and a maximum value of 2¹⁵-1+2¹⁵=2¹⁶-1 (if the flag is set to the value RD just after the general counter 315 is zeroed). This embodiment of the present invention offers the advantage of exercising control of the threshold value VH in a simple way and with reduced memory occupation.

With each location 301-308 of the cache memory 155 is furthermore associated a partial counter 331-338, for example with 7-bit, incremented automatically with each clock signal CLK. The partial counter 331-338 is set to an initial value when the flag corresponding to the block takes the value RAH or U, or else with a reading of the block or of any previous block. Advantageously, this initial value is programmable, for example between 0 and 2³-1. When the partial counter 331-338 associated with a block having the corresponding flag of value RAH or U returns to zero after having reached its maximum value, in the example in question after a programmable number of clock signals of between 2⁷ and 2⁷-(2³-1), the flag associated with the block is modified to the value RAH_O and RD_O respectively. This embodiment offers the advantage of making it possible to vary the threshold values VL and VL1 (assumed equal) in a simple and fast manner. It should be noted that preferably the indicators 321-328 described above are embodied using a portion of the partial counters 331-338; it suffices to enable their automatic incrementation only when the flag associated with the relevant block has the value RAH or U.

The present invention however lends itself to being embodied also with various structures, for example with two independent counters associated with each block of the cache memory, and possibly incremented with each read access to the cache memory instead of with each clock signal, and the like.

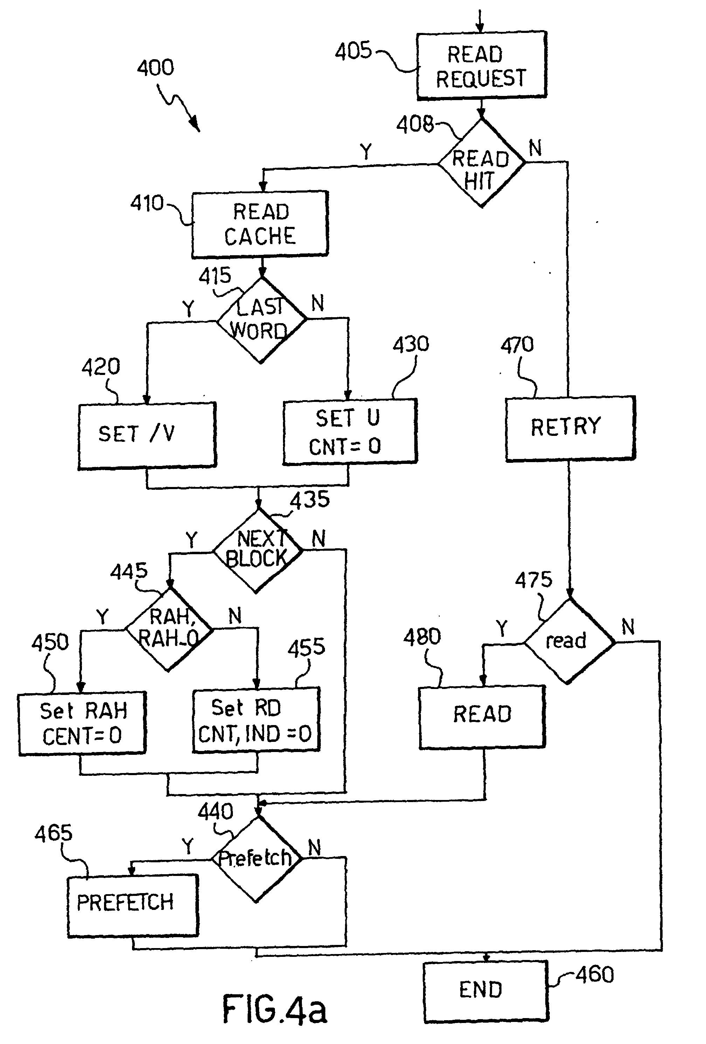

With reference now to the flow chart of Fig. 4a, a method 400 for managing the cache memory described above begins at block 405 in which the reading of a datum (word) from the memory is requested. The method checks in block 408 whether the datum is resident in the cache memory in an enabled state; to do this it suffices to check whether the address of the block which contains this word is present in the address field of the various locations of the cache memory and whether the corresponding flag has a value different from /V. In the affirmative (read hit) the method passes to block 410, in which the requested word is read directly from the cache memory. The method then checks in block 415 whether the word read is the last one of the block. In the affirmative, the method passes to block 420, in which the flag associated with the cache memory block is set to the value /V. If the word read is not the last one of the block, the method passes to block 430, in which the flag associated with the cache memory block is set to the value U (if not already at this value) and the corresponding partial counter is set to the initial value, for example 0.

In both cases, the method then proceeds to block 435 which checks whether the cache memory also contains the block subsequent to the one in question (read ahead or else requested by another unit). In the negative, the method passes directly to block 440 (described below). In the affirmative, the method checks in block 445 whether the flag associated with the subsequent block has the value RAH or RAH_O (i.e. whether the subsequent block has been requested in line with a read ahead). In the affirmative, in block 450 the flag associated with the subsequent block is set to the value RAH (if not already at this value) and the corresponding partial counter is zeroed, as the probability of an access to this block within a short period is increased. In the negative, i.e. if the flag associated with the subsequent block has value RD, RD_O or U, the method passes to block 455 in which the indicator and the counter corresponding to the subsequent block are zeroed, as the probability of an access to this block within a short period is increased; the associated flag, if of value RD_O, is furthermore set to the value RD.

In both cases, the method then proceeds to block 440 which checks whether the reading ahead of one or more subsequent blocks is requested; typically, with each read request by a unit is associated a code indicative of the fact that no read ahead is requested, or else the number of subsequent blocks (for example 1, 2 or 3) for which read ahead is requested. If the reading ahead of the subsequent block is requested and this block is not already present in the cache memory, a check is made as to whether there are blocks available to be replaced by data corresponding to a read ahead operation; this check is for example performed by examining an appropriate register (continually updated as described below) in which the address of an available block is stored. Should it not be necessary or not be possible to perform any read ahead, the method passes directly to a final block 460. Otherwise, the method passes to block 465, in which the data requested are read from the main memory and copied into the available block in the cache memory. On conclusion of the read operation, the relevant partial counter is zeroed and the flag associated with the replaced cache memory block is set to the value RAH. The method then concludes with the final block 460. In alternative embodiments, the reading ahead of blocks is performed when the percentage use of the block read exceeds a specific threshold value, or else when the last word of the block is read, and the like.

Returning to block 408, if the read-requested word is not resident in the cache memory in an enabled state (read miss), the method passes to block 470, in which a suitable signal (RETRY) is sent to the requesting unit to advise it to repeat the read request, whilst the block containing the requested datum is meanwhile loaded into the cache memory. In particular, the method passes to block 475 which checks whether there are blocks available to be replaced. In the negative, the method passes directly to the final block 460. In the affirmative, the method passes to block 480, in which the requested data are read from the main memory and copied into the available block in the cache memory. On concluding the read operation, the relevant indicator is zeroed and the flag associated with the replaced cache memory block is set to the value RD. Once the operation of reading from the main memory has begun (without waiting for its completion), the method passes to block 440 described previously, in order to perform any read ahead operations.

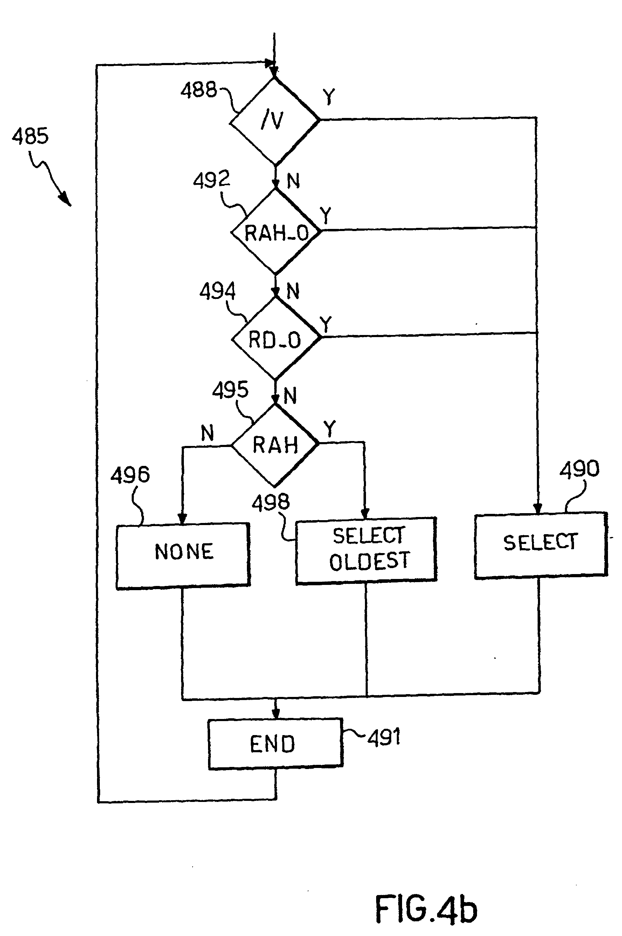

The replacing of the blocks of the cache memory is managed via a method 485, illustrated in the flow chart of Fig. 4b. The method begins at block 488 which checks whether there is a cache memory block whose flag has the value /V. In the affirmative, the method passes to block 490, in which this non-enabled block is selected to be replaced either for an actual read operation or for a read ahead operation, by for example loading the address of this block into an appropriate replacement register; the method then continues to a final block 491.

In the negative, the method passes to block 492 which checks whether there is a cache memory block whose flag has the value RAH_O. The blocks in the "read ahead old" state are the best candidates, obviously after the non-enabled blocks, for replacement; actually, if a block read ahead has not been used for a long period of time it is very probable that it will never be requested (for example because the read ahead has loaded more data than actually required into the cache memory) or else that it contains data requested by a very slow unit and which therefore need not be optimized. If there is a cache memory block whose flag has the value RAH_O, the method passes to block 490.

Otherwise, the method passes to block 494 which checks whether there is a cache memory block whose flag has the value RD_O. The blocks in the "read old" state are generally blocks which are already partially read and not used further, as it is very rare for a read-requested block never to be read by the unit which requested it and to which a RETRY signal has been sent; therefore, such blocks might again be requested by the same unit, if the latter is able to perform only small transfers of data, or else not be requested further, as the transfer has concluded. It should be noted that the blocks which are already partially read (their flag having the value U) pass to the condition RD_O faster than the read-allocated but not yet used blocks (their flag having the value RD), as the threshold value VL is less than the threshold value VH; this makes it possible to replace first the blocks which are already partially read, as it is less probable that they will be used again (for example because the read request relates to one word only) with respect to a block not yet read. If there is a data block in the cache memory whose flag has the value RD_O, the method passes to block 490.

Otherwise, the method passes to block 495 which checks whether there is a cache memory block whose flag has the value RAH. In the negative, the method passes to block 496, in which no block of the cache memory is selected; for example, the replacement register described above is set to a null value, to indicate that no block of the cache memory is available to be replaced. In this way, the blocks of type RD and U are never replaced, as it is preferable not to disable such blocks in order to load blocks with like probability of being used. On the other hand, in an alternative embodiment, a block is selected (if there is one) in the "Used" state with the highest value of the associated partial counter (making it available only for an actual read operation). The method then passes to the final block 491. Returning to block 495, if there are cache memory blocks whose flag has the value RAH, the method passes to block 498 which extracts (for example by scanning the various blocks of the cache memory in sequence) the block in the "read ahead" state with the highest value of the associated partial counter (i.e. the "oldest" block). This block is then selected by updating the replacement register. In this case, the block is made available only for an actual read operation, by setting an appropriate flag for example. It should be noted that, although the probability of the blocks in the "read ahead" state being subsequently used is very high, it is preferable to disable one of these blocks rather than to slow down a new read; in this way, the blocks in the state RAH are on the other hand never selected to be replaced with a read ahead operation, as it is preferable that this operation not disable these blocks of the cache memory. The method then passes to block 491.

With reference now to the final block 491, the method returns to the initial block 488 so as continually to repeat (for example with each clock signal) the updating of the register indicative of block available to be replaced and of the corresponding flag. The present invention however lends itself to being embodied also by carrying out the search for blocks available directly at the time of requesting the actual read operation or the read ahead operation (blocks 480 and 440 respectively in Fig. 4a).

The cache-type memory structure of the present invention is suitable for use also for write operations, which take place in a conventional manner known per se. For example, a "store-through" type technique is used in which a write operation modifies both the datum present in the cache memory and the corresponding datum present in the main memory, so that the information present in the main memory is constantly updated; alternatively, a "store-in" type technique is used in which the write operation modifies only the datum present in the cache memory; in this case, the data present in the main memory are not constantly updated, so that before freeing a cache memory block the latter has to be copied over into the main memory if this block has meanwhile been modified.

## Claims

1. Cache-type memory structure (155, 160) comprising a cache memory (155) having a plurality of blocks (301-308) for storing corresponding data from a main memory (120), means (160) for managing the allocation of the data in the said blocks (301-308)
**characterised in that**
the said means (160) are adapted for:
- associating with each block (301,308) a flag indicating different states of the data in said block, said flag having a first value (\V) when the block is free or contains completely used data, a second value (RAH) when the block contains data requested for a read ahead operation but never used, a third value (RAH_0) when the block contains data requested for a read ahead operation but never used for a period of time greater than a first threshold value (VL), a fourth value (U) when the block contains partially used data, a fifth value (RD_0) when the block contains partially used data and in which the period of time from a last use is greater than a second threshold value (VL1),
- requesting (440,480) the allocation of a block of the cache type memory for new data,
- selecting (488,490), if there is one, a block with the associated flag having the first value (/V),
- otherwise selecting (492,490), if there is one, a block with the associated flag having the third value (RAH_0),
- otherwise selecting (494,490), if there is one, a block with the associated flag having the fifth value (RD_0),
- otherwise and if the said request corresponds to an actual read operation (480), selecting (495,498), if there is one, a block with the associated flag having the second value (RAH).

2. Cache-type memory structure (155, 160) according to Claim 1, in which the said means (160) are furthermore adapted for setting the flag to a sixth value (RD) when the block contains data requested for an actual read operation but never used, the flag taking the fifth value (RD_O) even when the block contains data requested for an actual read operation but never used for a period of time greater than a third threshold value (VH).

3. Cache-type memory structure (155, 160) according to Claim 1 or 2, in which the second threshold value (VL1) is equal to the first threshold value (VL).

4. Cache-type memory structure (155, 160) according to any one of Claims 1 to 3, in which the second threshold value (VL1) is less than the third threshold value (VH).

5. Cache-type memory structure (155, 160) according to any one of Claims 1 to 4, in which the said means (160) set the flag to the third value (RAH_O) only if simultaneously a corresponding previous block is not used for a period of time greater than the first threshold value (VL).

6. Cache-type memory structure (155, 160) according to any one of Claims 1 to 5, in which the said means (160) set the flag to the fifth value (RD_O) only if simultaneously the corresponding previous block is not used for a period of time greater than the second threshold value (VL1) when the block contains partially used data or greater than the third threshold value (VH) when the block contains never used data.

7. Cache-type memory structure (155, 160) according to Claim 6, furthermore comprising a partial counter (331-338) associated with each block (301-308) and incremented with a clock signal (CLK), the said means (160) setting the partial counter (331-338) to an initial value when the flag takes the second (RAH) or the fourth (U) value or when the corresponding previous block is used, and the said means (160) modifying the flag from the second (RAH) and from the fourth (U) value, respectively, to the third (RAH_O) and to the fifth (RD_O) value when the partial counter (331-338) reaches a maximum value.

8. Cache-type memory structure (155, 160) according to Claim 7, in which the said initial value is programmable.

9. Cache-type memory structure (155, 160) according to any one of Claims 2 to 8, furthermore comprising a general counter (315) incremented with the clock signal (CLK), the said means (160) modifying the flag from the sixth value (RD) to the fifth value (RD_O) when the block and the corresponding previous block are not used for a preset number of completions of a count cycle of the general counter (315).

10. Cache-type memory structure (155, 160) according to any one of Claims 1 to 9, in which the cache memory (155) is of the full associative type.

11. Processing system (100) comprising the cache-type memory structure (155, 160) according to any one of Claims 1 to 10.

12. Processing system (100) according to Claim 11, comprising a system bus (105) to which is linked the main memory (120) and a plurality of central processing units (110-116), a local bus (125) to which are linked a plurality of peripheral units (130-134), an arbitration unit (140) for managing access to the local bus (125), a bridge unit (145) for interfacing the local bus (125) with the system bus (105), the cache-type memory structure (155, 160) being included in the bridge unit (145).

13. Method (400, 485) for managing a cache-type memory (155), which comprises a cache memory (155) having a plurality of blocks (301-308) for storing corresponding data from a main memory (120), said method comprising the steps of:
- associating with each block (301,308) a flag indicating different states of the data in said block, said flag having a first value (\V) when the block is free or contains completely used data, a second value (RAH) when the block contains data requested for a read ahead operation but never used, a third value (RAH_0) when the block contains data requested for a read ahead operation but never used for a period of time greater than a first threshold value (VL), a fourth value (U) when the block contains partially used data, a fifth value (RD_0) when the block contains partially used data and in which the period of time from a last use is greater than a second threshold value (VL1),
a) requesting (440,480) the allocation of a block of the cache type memory for new data,
b) selecting (488,490), if there is one, a block with the associated flag having the first value (/V),
c) otherwise selecting (492,490), if there is one, a block with the associated flag having the third value (RAH_0),
d) otherwise selecting (494, 490), if there is one, a block with the associated flag having the fifth value (RD_0),
e) otherwise and if the said request corresponds to an actual read operation (480), selecting (495,498), if there is one, a block with the associated flag having the second value (RAH).

14. Method (400, 485) according to Claim 13, furthermore comprising in step d) the step of selecting if there is one a block (RD_O) containing data requested for an actual read operation but never used for a period of time greater than a third threshold value (VH).

15. Method (400, 485) according to Claim 13 or 14, in which the step e) consists in selecting (498) one of the blocks (RAH) containing data requested for a read ahead operation but never used for a period of time of maximum value.

16. Method (400, 485) according to any one of Claims 13 to 15, in which the second threshold value (VL1) is equal to the first threshold value (VL).

17. Method (400, 485) according to any one of Claims 13 to 16, in which the second threshold value (VL1) is less than the third threshold value (VH).

18. Method (400, 485) according to any one of Claims 13 to 17, in which the block is selected in step c) only if simultaneously a corresponding previous block is not used for a period of time greater than the first threshold value (VL).

19. Method (400, 485) according to any one of Claims 13 to 18, in which the block is selected in step d) only if simultaneously the corresponding previous block is not used for a period of time greater than the second threshold value (VL1) when the block contains partially used data or greater than the third threshold value (VH) when the block contains never used data.

## Patentansprüche

1. Cache-Typ-Speicherstruktur (155, 160), die einen Cache-Speicher (155), der eine Mehrzahl von Blöcken (301-308) aufweist, zum Speichern entsprechender Daten von einem Hauptspeicher (120), und eine Einrichtung (160) zum Verwalten der Zuteilung der Daten in den Blöcken (301-308) aufweist,
**dadurch gekennzeichnet, daß**
die Einrichtung (160) für folgende Schritte angepaßt ist:
- Zuordnen eines Flags zu jedem Block (301, 308), das unterschiedliche Zustände der Daten in dem Block anzeigt, wobei das Flag einen ersten Wert (\V), wenn der Block frei ist oder vollständig verwendete Daten enthält, einen zweiten Wert (RAH), wenn der Block Daten enthält, die für eine Vorausleseoperation angefordert, jedoch nie verwendet wurden, einen dritten Wert (RAH_0), wenn der Block Daten enthält, die für eine Vorausleseoperation angefordert, jedoch niemals über einen Zeitraum verwendet wurden, der größer als ein erster Schwellenwert (VL) ist, einen vierten Wert (U), wenn der Block teilweise verwendete Daten enthält, und einen fünften Wert (RD_0), wenn der Block teilweise verwendete Daten enthält, und bei dem der Zeitraum von einer letzten Verwendung größer als ein zweiter Schwellenwert (VL1) ist, aufweist,
- Anfordern (440, 480) der Zuteilung eines Blocks des Cache-Typ-Speichers für neue Daten,
- Auswählen (488, 490) eines Blocks mit dem zugeordneten Flag, das den ersten Wert (/V) aufweist, falls es einen gibt,
- andernfalls Auswählen (492, 490) eines Blocks mit dem zugeordneten Flag, das den dritten Wert (RAH_0) aufweist, falls es einen gibt,
- andernfalls Auswählen (494, 490) eines Blocks mit dem zugeordneten Flag, das den fünften Wert (RD_0) aufweist, falls es einen gibt,
- andernfalls und wenn die Anforderung einer tatsächlichen Leseoperation (480) entspricht, Auswählen (495, 498) eines Blocks mit dem zugeordneten Flag, das den zweiten Wert (RAH) aufweist, falls es einen gibt.

2. Cache-Typ-Speicherstruktur (155, 160) gemäß Anspruch 1, bei der die Einrichtung (160) ferner zum Einstellen des Flags auf einen sechsten Wert (RD) angepaßt ist, wenn der Block Daten enthält, die für eine tatsächliche Leseoperation angefordert, jedoch niemals verwendet wurden, wobei das Flag den fünften Wert (RD_0) selbst dann annimmt, wenn der Block Daten enthält, die für eine tatsächliche Leseoperation angefordert, jedoch über einen Zeitraum, der größer als ein dritter Schwellenwert (VH) ist, niemals verwendet wurden.

3. Cache-Typ-Speicherstruktur (155, 160) gemäß Anspruch 1 oder 2, bei der der zweite Schwellenwert (VL1) gleich dem ersten Schwellenwert (VL) ist.

4. Cache-Typ-Speicherstruktur (155, 160) gemäß einem der Ansprüche 1 bis 3, bei der der zweite Schwellenwert (VL1) kleiner als der dritte Schwellenwert (VH) ist.

5. Cache-Typ-Speicherstruktur (155, 160) gemäß einem der Ansprüche 1 bis 4, bei der die Einrichtung (160) das Flag nur dann auf den dritten Wert (RAH_0) setzt, wenn gleichzeitig ein entsprechender vorheriger Block nicht über einen Zeitraum, der größer als der erste Schwellenwert (VL) ist, verwendet wird.

6. Cache-Typ-Speicherstruktur (155, 160) gemäß einem der Ansprüche 1 bis 5, bei der die Einrichtung (160) das Flag nur dann auf den fünften Wert (RD_0) setzt, wenn gleichzeitig der entsprechende vorherige Block nicht über einen Zeitraum verwendet wird, der größer als der zweite Schwellenwert (VL1) ist, wenn der Block teilweise verwendete Daten enthält, oder größer als der dritte Schwellenwert (VH) ist, wenn der Block niemals verwendete Daten enthält.

7. Cache-Typ-Speicherstruktur (155, 160) gemäß Anspruch 6, die ferner einen Teilzähler (331-338) aufweist, der jedem Block (301-308) zugeordnet ist und mit einem Taktsignal (CLK) inkrementiert wird, wobei die Einrichtung (160) den Teilzähler (331-338) auf einen Anfangswert setzt, wenn das Flag den zweiten (RAH) oder den vierten (U) Wert annimmt, oder wenn der entsprechende vorherige Block verwendet wird, und die Einrichtung (160) das Flag von dem zweiten (RAH) und von dem vierten (U) Wert auf den dritten (RAH_0) bzw. auf den fünften (RD_0) Wert modifiziert, wenn der Teilzähler (331-338) einen Maximalwert erreicht.

8. Cache-Typ-Speicherstruktur (155, 160) gemäß Anspruch 7, bei der der Anfangswert programmierbar ist.

9. Cache-Typ-Speicherstruktur (155, 160) gemäß einem der Ansprüche 2 bis 8, die ferner einen allgemeinen Zähler (315) aufweist, der mit dem Taktsignal (CLK) inkrementiert wird, wobei die Einrichtung (160) das Flag von dem sechsten Wert (RD) auf den fünften Wert (RC_0) modifiziert, wenn der Block und der entsprechende vorherige Block für eine voreingestellte Anzahl von Vollendungen eines Zählzyklus des allgemeinen Zählers (315) nicht verwendet werden.

10. Cache-Typ-Speicherstruktur (155, 160) gemäß einem der Ansprüche 1 bis 9, bei der der Cache-Speicher (155) von dem voll assoziativen Typ ist.

11. Verarbeitungssystem (100), das die Cache-Typ-Speicherstruktur (155, 160) gemäß einem der Ansprüche 1 bis 10 aufweist.

12. Verarbeitungssystem (100) gemäß Anspruch 11, das einen Systembus (105), mit dem der Hauptspeicher (120) und eine Mehrzahl zentraler Verarbeitungseinheiten (110-116) verbunden sind, einen lokalen Bus (125), mit dem eine Mehrzahl von Peripherieeinheiten (130-134) verbunden ist, eine Entscheidungseinheit (140) zum Verwalten eines Zugriffs auf den lokalen Bus (125) und eine Brückeneinheit (145) zum schnittstellenmäßigen Verbinden des lokalen Bus (125) mit dem Systembus (105) aufweist, wobei die Cache-Typ-Speicherstruktur (155, 160) in der Brückeneinheit (145) enthalten ist.

13. Verfahren (400, 485) zum Verwalten eines Cache-Typ-Speichers (155), der einen Cache-Speicher (155), der eine Mehrzahl von Blöcken (301-308) aufweist, zum Speichern entsprechender Daten von einem Hauptspeicher (120) aufweist, wobei das Verfahren folgende Schritte aufweist:
Zuordnen eines Flags zu jedem Block (301, 308), das unterschiedliche Zustände der Daten in dem Block anzeigt, wobei das Flag einen ersten Wert (\V), wenn der Block frei ist oder vollständig verwendete Daten enthält, einen zweiten Wert (RAH), wenn der Block Daten enthält, die für eine Vorausleseoperation angefordert, jedoch niemals verwendet wurden, einen dritten Wert (RAH_0), wenn der Block Daten enthält, die für eine Vorausleseoperation angefordert, jedoch über einen Zeitraum, der größer als ein erster Schwellenwert (VL) ist, niemals verwendet wurden, einen vierten Wert (U), wenn der Block teilweise verwendete Daten enthält, und einen fünften Wert (RD_0), wenn der Block teilweise verwendete Daten enthält, und bei dem der Zeitraum von einer letzten Verwendung größer als ein zweiter Schwellenwert (VL1) ist, aufweist,
a) Anfordern (440, 480) der Zuteilung eines Blocks des Cache-Typ-Speichers für neue Daten,
b) Auswählen (488, 490) eines Blocks mit dem zugeordneten Flag, das den ersten Wert (/V) aufweist, falls es einen gibt,
c) andernfalls Auswählen (492, 490) eines Blocks mit dem zugeordneten Flag, das den dritten Wert (RAH_0) aufweist, falls es einen gibt,
d) andernfalls Auswählen (494, 490) eines Blocks mit dem zugeordneten Flag, das den fünften Wert (RD_0) aufweist, falls es einen gibt,
e) andernfalls und wenn die Anforderung einer tatsächlichen Leseoperation (480) entspricht, Auswählen (495, 498) eines Blocks mit dem zugeordneten Flag, das den zweiten Wert (RAH) aufweist, falls es einen gibt.

14. Verfahren (400, 485) gemäß Anspruch 13, das ferner in Schritt d) den Schritt eines Auswählens aufweist, wenn es einen Block (RD_0) gibt, der Daten enthält, die für eine tatsächliche Leseoperation angefordert, jedoch über einen Zeitraum, der größer als ein dritter Schwellenwert (VH) ist, niemals verwendet wurden.

15. Verfahren (400, 485) gemäß Anspruch 13 oder 14, bei dem der Schritt e) aus einem Auswählen (498) eines der Blöcke (RAH), die Daten enthalten, die für eine Vorausleseoperation angefordert, jedoch über einen Zeitraum eines Maximalwertes niemals verwendet wurden, besteht.

16. Verfahren (400, 485) gemäß einem der Ansprüche 13 bis 15, bei dem der zweite Schwellenwert (VL1) gleich dem ersten Schwellenwert (VL) ist.

17. Verfahren (400, 485) gemäß einem der Ansprüche 13 bis 16, bei dem der zweite Schwellenwert (VL1) kleiner als der dritte Schwellenwert (VH) ist.

18. Verfahren (400, 485) gemäß einem der Ansprüche 13 bis 17, bei dem der Block in Schritt c) nur dann ausgewählt wird, wenn gleichzeitig ein entsprechender vorheriger Block nicht über einen Zeitraum, der größer als der erste Schwellenwert (VL) ist, verwendet wird.

19. Verfahren (400, 485) gemäß einem der Ansprüche 13 bis 18, bei dem der Block in Schritt d) nur dann ausgewählt wird, wenn gleichzeitig der entsprechende vorherige Block nicht über einen Zeitraum, der größer als der zweite Schwellenwert (VL1) ist, wenn der Block teilweise verwendete Daten enthält, oder größer als der dritte Schwellenwert (VH) ist, wenn der Block niemals verwendete Daten enthält, verwendet wird.

## Revendications

1. Structure de mémoire de type antémémoire (155, 160) comprenant une antémémoire (155) ayant une multiplicité de blocs (301-308) pour stocker des données correspondantes provenant d'une mémoire principale (120), des moyens (160) pour gérer l'allocation des données dans les blocs (301-308)
**caractérisée en ce que**
lesdits moyens (160) sont adaptés pour :
- associer à chaque bloc (301, 308) un drapeau indiquant différents états des données dans ce bloc, ce drapeau ayant une première valeur (\V) lorsque le bloc est libre ou contient des données complètement utilisées, une seconde valeur (RAH) lorsque le bloc contient des données demandées pour une opération de lecture anticipée mais jamais utilisées, une troisième valeur (RAH_0) lorsque le bloc contient des données demandées pour une opération de lecture anticipée mais jamais utilisées pendant un intervalle de temps supérieur à une première valeur de seuil (VL), une quatrième valeur (U) lorsque le bloc contient des données partiellement utilisées, une cinquième valeur (RD_O) lorsque le bloc contient des données partiellement utilisées et l'intervalle de temps à partir d'une dernière utilisation est supérieur à une seconde valeur de seuil (VL1),
- demander (440, 480) l'allocation d'un bloc de la mémoire de type antémémoire pour de nouvelles données,
- sélectionner (488, 490), s'il y en a un, un bloc pour lequel le drapeau associé a la première valeur (/V),
- sinon sélectionner (492, 490), s'il y en a un, un bloc pour lequel le drapeau associé a la troisième valeur (RAH_0),
- sinon sélectionner (494, 490), s'il y en a un, un bloc pour lequel le drapeau associé a la cinquième valeur (RD_O),
- sinon et si la demande correspond à une opération de lecture réelle (480), sélectionner (495, 498), s'il y en a un, un bloc pour lequel le drapeau associé a la seconde valeur (RAH).

2. Structure de mémoire de type antémémoire (155, 160) selon la revendication 1, dans laquelle lesdits moyens (160) sont en outre adaptés pour donner au drapeau une sixième valeur (RD) lorsque le bloc contient des données demandées pour une opération de lecture réelle mais jamais utilisées, le drapeau prenant la cinquième valeur (RD_O) même lorsque le bloc contient des données demandées pour une opération de lecture réelle mais jamais utilisées pendant un intervalle de temps supérieur à une troisième valeur de seuil (VH).

3. Structure de mémoire de type antémémoire (155, 160) selon la revendication 1 ou 2, dans laquelle la seconde valeur de seuil (VL1) est égale à la première valeur de seuil (VL).

4. Structure de mémoire de type antémémoire (155, 160) selon l'une quelconque des revendications 1 à 3, dans laquelle la seconde valeur de seuil (VL1) est inférieure à la troisième valeur de seuil (VH).

5. Structure de mémoire de type antémémoire (155, 160) selon l'une quelconque des revendications 1 à 4, dans laquelle lesdits moyens (160) donnent au drapeau la troisième valeur (RAH_0) seulement si simultanément un bloc précédent correspondant n'est pas utilisé pendant un intervalle de temps supérieur à la première valeur de seuil (VL).

6. Structure de mémoire de type antémémoire (155, 160) selon l'une quelconque des revendications 1 à 5, dans laquelle lesdits moyens (160) fixent le drapeau à la cinquième valeur (RD_O) seulement si simultanément le bloc précédent correspondant n'est pas utilisé pendant un intervalle de temps supérieur à la seconde valeur de seuil (VL1) lorsque le bloc contient des données partiellement utilisées, ou supérieur à la troisième valeur de seuil (VH) lorsque le bloc contient des données jamais utilisées.

7. Structure de mémoire de type antémémoire (155, 160) selon la revendication 6, comprenant en outre un compteur partiel (331-338) associé à chaque bloc (301-308) et incrémenté avec un signal d'horloge (CLK), lesdits moyens (160) fixant le compteur partiel (331-338) à une valeur initiale lorsque le drapeau prend la seconde (RAH) ou la quatrième (U) valeur, ou lorsque le bloc précédent correspondant est utilisé, et lesdits moyens (160) modifiant le drapeau en le faisant passer de la seconde valeur (RAH) et de la quatrième valeur (U), respectivement à la troisième valeur (RAH_O) et à la cinquième valeur (RD_O), lorsque le compteur partiel (331-338) atteint une valeur maximale.

8. Structure de mémoire de type antémémoire (155, 160) selon la revendication 7, dans laquelle la valeur initiale est programmable.

9. Structure de mémoire de type antémémoire (155, 160) selon l'une quelconque des revendications 2 à 8, comprenant en outre un compteur général (315) incrémenté par le signal d'horloge (CLK), lesdits moyens (160) modifiant le drapeau pour le faire passer de la sixième valeur (RD) à la cinquième valeur (RD_O) lorsque le bloc et le bloc précédent correspondant ne sont pas utilisés pendant un nombre d'accomplissements fixé à l'avance d'un cycle de comptage du compteur général (315).

10. Structure de mémoire de type antémémoire (155, 160) selon l'une quelconque des revendications 1 à 9, dans laquelle l'antémémoire (155) est du type entièrement associatif.

11. Système de traitement (100) comprenant la structure de mémoire de type antémémoire (155, 160) selon l'une quelconque des revendications 1 à 10.

12. Système de traitement (100) selon la revendication 11, comprenant un bus de système (105) auquel sont reliées la mémoire principale (120) et une multiplicité d'unités centrales de traitement (110-166), un bus local (125) auquel sont reliées une multiplicité d'unités périphériques (130-134), une unité d'arbitrage (140) pour gérer l'accès au bus local (125), une unité de pont (145) pour assurer l'interface entre le bus local (125) et le bus de système (105), la structure de mémoire de type antémémoire (155, 160) étant incluse dans l'unité de pont (145).

13. Procédé (400, 485) pour gérer une mémoire de type antémémoire (155) qui comprend une antémémoire (155) ayant une multiplicité de blocs (301-308) pour stocker des données correspondantes provenant d'une mémoire principale (120), ce procédé comprenant les étapes suivantes :
- on associe à chaque bloc (301, 308) un drapeau indiquant différents états des données dans ce bloc, ce drapeau ayant une première valeur (\V) lorsque le bloc est libre ou contient des données complètement utilisées, une seconde valeur (RAH) lorsque le bloc contient des données demandées pour une opération de lecture anticipée mais jamais utilisées, une troisième valeur (RAH_0) lorsque le bloc contient des données demandées pour une opération de lecture anticipée mais jamais utilisées pendant un intervalle de temps supérieur à une première valeur de seuil (VL), une quatrième valeur (U) lorsque le bloc contient des données partiellement utilisées, une cinquième valeur (RD_O) lorsque le bloc contient des données partiellement utilisées et l'intervalle de temps à partir d'une dernière utilisation est supérieur à une seconde valeur de seuil (VL1),
a) on demande (440, 480) l'allocation d'un bloc de la mémoire de type antémémoire pour de nouvelles données,
b) on sélectionne (488, 490), s'il y en a un, un bloc pour lequel le drapeau associé a la première valeur (/V),
c) sinon, on sélectionne (492, 490), s'il y en a un, un bloc pour lequel le drapeau associé a la troisième valeur (RAH_0),
d) sinon, on sélectionne (494, 490), s'il y en a un, un bloc pour lequel le drapeau associé a la cinquième valeur (RD_O),
e) sinon et si la demande correspond à une opération de lecture réelle (480), on sélectionne (495, 498), s'il y en a un, un bloc pour lequel le drapeau associé a la seconde valeur (RAH).

14. Procédé (400, 485) selon la revendication 13, comprenant en outre à l'étape (d), l'étape consistant à sélectionner, s'il y en a un, un bloc (RD_O) contenant des données demandées pour une opération de lecture réelle mais jamais utilisées pendant un intervalle de temps supérieur à une troisième valeur de seuil (VH).

15. Procédé (400, 485) selon la revendication 13 ou 14, dans lequel l'étape e) consiste à sélectionner (498) l'un des blocs (RAH) contenant des données demandées pour une opération de lecture anticipée mais jamais utilisées pendant un intervalle de temps de valeur maximale.

16. Procédé (400, 485) selon l'une quelconque des revendications 13 à 15, dans lequel la seconde valeur de seuil (VL1) est égale à la première valeur de seuil (VL).

17. Procédé (400, 485) selon l'une quelconque des revendications 13 à 16, dans lequel la seconde valeur de seuil (VL1) est inférieure à la troisième valeur de seuil (VH).

18. Procédé (400, 485) selon l'une quelconque des revendications 13 à 17, dans lequel le bloc est sélectionné à l'étape c) seulement si simultanément un bloc précédent correspondant n'est pas utilisé pendant un intervalle de temps supérieur à la première valeur de seuil (VL).

19. Procédé (400, 485) selon l'une quelconque des revendications 13 à 18, dans lequel le bloc est sélectionné à l'étape d) seulement si simultanément le bloc précédent correspondant n'est pas utilisé pendant un intervalle de temps supérieur à la seconde valeur de seuil (VL1) lorsque le bloc contient des données partiellement utilisées, ou supérieur à la troisième valeur de seuil (VH) lorsque le bloc contient des données jamais utilisées.
